# EUROPEAN PATENT APPLICATION

(11) **EP 4 787 187 A1**
(43) Date of publication of application: **05.08.2026**
(21) Application number: 23954412.5
(22) Date of filing: 29.09.2023
(51) Int. Cl.: G06F 16/90, G01C 21/00, G08G 1/005

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: KOYANAGI, Shogo, Tokyo 170-0013 (JP)
(74) Representative: Hoffmann Eitle
(86) International application number: PCT/JP2023/035809
(87) International publication number: WO 2025/069447

(57) **Abstract**

An information processing device according to the present invention includes a first transmission unit, a second transmission unit, a route information acquisition unit, an appropriateness determination unit, and a presentation control unit. The first transmission unit transmits a preferred condition by a user for a travel plan from a point of departure and a presentation request for proposal information to a first external device that presents the proposal information including a recommended visiting spot that is a spot recommended to visit from the point of departure in a case where the preferred condition is input. The second transmission unit transmits route search condition information based on the proposal information presented by the first external device in response to the presentation request to a second external device that is different from the first external device. The route information acquisition unit acquires route information regarding a travel route via the recommended visiting spot searched for by the second external device in accordance with the route search condition information. The appropriateness determination unit determines the appropriateness of the travel route on the basis of a comparison between the preferred condition and the route information. In a case where the travel route is determined to be appropriate, the presentation control unit presents the travel route as a recommended travel plan for the user.

## Description

### Field

The present invention relates to an information processing device, an information processing method, and an information processing program.

### Background

Some recent artificial intelligence chatbots have advanced sentence interpretation ability and sentence generation ability through pre-training a large amount of text data on the Internet and can search information on the web in response to a question or a request from a user and summarize search results to provide an answer. According to such an artificial intelligence chatbot, it is also possible to listen to a user's request and to make a proposal corresponding to related information or services. Therefore, for example, it is possible to create an application that implements a recommendation function by cooperating with an artificial intelligence chatbot via an application programming interface (API).

Meanwhile, Patent Literature 1 discloses a technology of presenting recommendation information depending on a user by repeating a question and an answer with the user by voice dialog (conversational input) using a chatbot.

### Citation List

### Patent Literature

Patent Literature 1: JP 2018-92585 A

### Summary

### Technical Problem

However, in the above-described prior art, it is not always possible to present an appropriate travel plan.

For example, the chatbot can generate an appropriate answer to the input from the user by using natural language processing technique; however, due to the need for pre-training, there are cases where the most recent situation is not reflected in the answer, resulting in presenting inaccurate information that is not based on the latest information.

For this reason, there is a demand for a method capable of presenting an appropriate travel plan even in a case where a travel plan, based on recommendation information output by such a chatbot that cannot support the latest information, is presented to the user.

The present invention has been made in view of the above and proposes an information processing device, an information processing method, and an information processing program capable of providing an appropriate travel plan.

### Solution to Problem

An information processing device, comprising: a first transmission unit that transmits a preferred condition by a user for a travel plan from a point of departure and a presentation request for proposal information to a first external device that presents the proposal information including a recommended visiting spot that is a spot recommended to visit from the point of departure in a case where the preferred condition is input; a second transmission unit that transmits route search condition information based on the proposal information presented by the first external device in response to the presentation request to a second external device that is different from the first external device; a route information acquisition unit that acquires route information regarding a travel route via the recommended visiting spot searched for by the second external device in accordance with the route search condition information; an appropriateness determination unit that determines appropriateness of the travel route on a basis of a comparison between the preferred condition and the route information; and a presentation control unit that presents the travel route as a recommended travel plan for the user in a case where the travel route is determined to be appropriate.

An information processing method executed by an information processing device, the method comprising: a first transmission step of transmitting a preferred condition by a user for a travel plan from a point of departure and a presentation request for proposal information to a first external device that presents the proposal information including a recommended visiting spot that is a spot recommended to visit from the point of departure in a case where the preferred condition is input; a second transmission step of transmitting route search condition information based on the proposal information presented by the first external device in response to the presentation request to a second external device that is different from the first external device; a route information acquisition step of acquiring route information regarding a travel route via the recommended visiting spot searched for by the second external device in accordance with the route search condition information; an appropriateness determination step of determining appropriateness of the travel route on a basis of a comparison between the preferred condition and the route information; and a presentation control step of presenting the travel route as a recommended travel plan for the user in a case where the travel route is determined to be appropriate.

### Brief Description of Drawings

FIG. 1 is a diagram illustrating an example of a system according to an embodiment.
FIG. 2 is a diagram illustrating an example of dialog control according to the embodiment.
FIG. 3 is a diagram illustrating a configuration example of a terminal device according to the embodiment.
FIG. 4 is a diagram (1) illustrating an information processing procedure according to the embodiment.
FIG. 5 is a diagram (2) illustrating an information processing procedure according to the embodiment.
FIG. 6 is a hardware configuration diagram illustrating an example of a computer that implements functions of a terminal device 10 according to the embodiment.

### Description of Embodiments

### [Embodiments]

Hereinafter, embodiments of the present invention will be described in detail with reference to the accompanying drawings. Note that, in the present specification and the drawings, components having substantially the same functional configuration are denoted by the same reference numerals, and redundant description is omitted.

One or a plurality of embodiments (including examples, modifications, and application examples) described below can each be implemented independently. On the other hand, the plurality of embodiments described below may be at least partially combined with at least some of the other embodiments as appropriate. The plurality of embodiments may include novel features different from each other. Therefore, the plurality of embodiments can contribute to solving objects or problems different from each other and can exhibit different effects.

### [1. System Configuration]

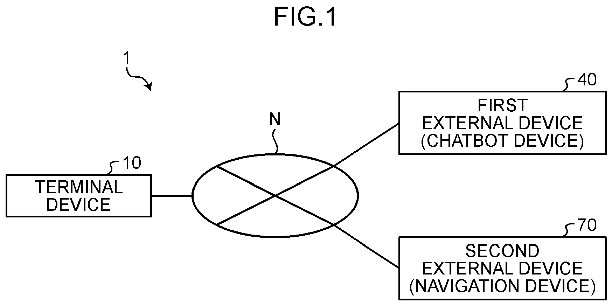

First, the configuration of a system according to an embodiment will be described with reference to FIG. 1. FIG. 1 is a diagram illustrating an example of the system according to the embodiment. A system 1 is illustrated in FIG. 1 as an example of the system according to the embodiment. Information processing according to the proposed technology of the present invention (hereinafter, abbreviated as "information processing of the embodiment") is implemented in the system 1.

As illustrated in FIG. 1, the system 1 includes a terminal device 10, a first external device 40, and a second external device 70. In addition, the terminal device 10, the first external device 40, and the second external device 70 are communicably connected in a wired or wireless manner via a network N. The system 1 may also include any number of terminal devices 10, any number of first external devices 40, and any number of second external devices 70.

The terminal device 10 may be an information processing terminal used by a user U who intends to receive provision of various pieces of recommendation information in a dialog via recommendation service implemented by the system 1. That is, the terminal device 10 is an information processing device that presents information regarding a recommendation target to the user U on the basis of a dialog with the user U.

Examples of the terminal device 10 include a smartphone, a wearable device, a tablet terminal, a notebook personal computer (PC), a desktop PC, a mobile phone, a personal digital assistant (PDA), and the like.

As another example, the terminal device 10 may be implemented as a navigation device built in or loaded on a vehicle, namely, an in-vehicle device. The terminal device 10 as an in-vehicle device may have not only a navigation function but also a recording function (drive recorder function).

The first external device 40 may be any server device as long as the device can implement a dialog with the user U.

In the present embodiment, it is based on the premise that the first external device 40 is a chatbot device that operates as a general-purpose chatbot. The first external device 40 may be equipped with so-called generative AI (artificial intelligence capable of creating various types of content or ideas such as a conversation, a story, an image, a moving image, or music). In addition, a machine learning model is used in the generative AI, and for example, learning is repeatedly performed so as to implement a highly accurate dialog with the user U.

For example, in a case where preferred conditions of the user U for a travel plan from the point of departure are obtained during a dialog with the user U, the first external device 40 can present proposal information (recommendation information) including a recommended visiting spot which is a spot recommended to be visited from the point of departure.

On the other hand, since training is necessary, the first external device 40 may not reflect the latest situation in the answer and, as a result, may output inaccurate recommendation information which is not based on the latest information. For example, in a case where the first external device 40 is having a dialog with the user U on a topic related to recommended visiting spots, there is a case where the first external device 40 recommends a spot that existed in the past but does not currently exist (for example, a store). Alternatively, even if the spot does exist, the first external device 40 may search for a route on the basis of old road information and present an unrealistic route at present.

Let us think of the service of providing the user U with a travel plan based on recommendation information. For example, in a case where inaccurate recommendation information as described above is used, there are cases where such a travel plan is presented to the user U in which a spot that no longer exists is used as a transit point or an unrealistic route is presented, and provision of an appropriate travel plan cannot be implemented. Therefore, in the information processing of the embodiment, a search for a travel route based on recommendation information output by the first external device 40 is executed by a highly accurate external device specialized in route searches (route guidance), namely, the second external device 70, and verification is also executed as to whether or not the searched travel route is appropriate and satisfies the conditions of the user U.

According to the information processing of the embodiment, if the first external device 40 has been able to output accurate recommendation information according to the conditions of the user U, it can be determined that the travel route is appropriate on the basis of a search result by the second external device 70. On the other hand, if the first external device 40 has output inaccurate recommendation information that does not meet the conditions of the user U, it can be determined that the travel route is inappropriate on the basis of a search result by the second external device 70.

Therefore, according to the information processing of the embodiment, even if the first external device 40 outputs inaccurate recommendation information not based on the latest information, it is possible to perform control in such a manner that a travel plan based on the inaccurate recommendation information is not provided.

Furthermore, in the information processing of the embodiment, various commands are transmitted to a chatbot device so that a general-purpose chatbot device (first external device 40) can be well utilized, whereby the chatbot device is customized. As described above, in the information processing of the embodiment, while utilizing the recommendation function of the first external device 40, verification is performed by the reliable second external device 70 for important processing related to implementation of the service of providing an appropriate travel plan to the user U.

Returning to the description of FIG. 1, the second external device 70 is a highly accurate server device that is updated so as to be able to support the latest information and specializes in the route search (route guidance). That is, the second external device 70 may be a cloud navigation device.

### [2. Example of Dialog Control]

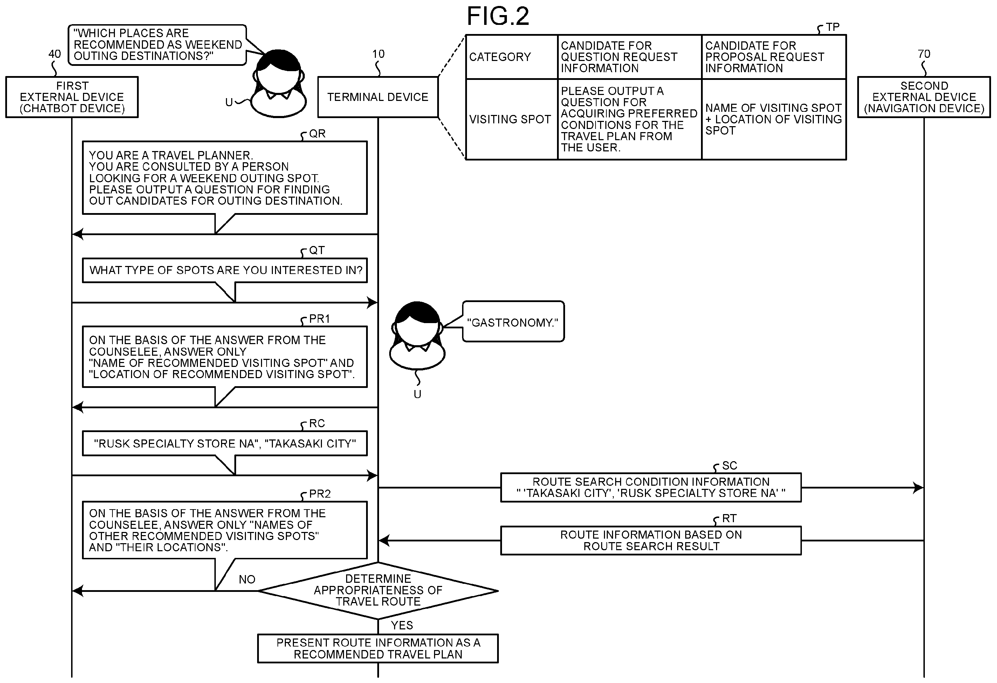

An example of dialog control implemented in the system 1 will be described. FIG. 2 is a diagram illustrating an example of dialog control according to the embodiment. FIG. 2 illustrates a scene where a dialog (voice dialog) with the user U by speech is performed. In the voice dialog, the user U inputs utterance voice of an answer to a microphone of the terminal device 10 in response to output voice, for example. Note that the output voice referred to here is a question voice or the like corresponding to a question text generated by the first external device 40 operating as a chatbot and is output from a speaker of the terminal device 10.

First, the terminal device 10 may accept specification of a category to which a recommendation target belongs (hereinafter, abbreviated as "category of the recommendation target") from the user U. There may be a plurality of categories for a recommendation target, and examples thereof include "Visiting Spot", "Cooking Recipe", and "Music Content". In such an example, the terminal device 10 may allow the user U to select one from among options by displaying categories for the recommendation target such as "Visiting Spot", "Cooking Recipe", and "Music Content" on a display screen. For example, the terminal device 10 may accept specification of the category of the recommendation target by a screen touch operation or may accept specification of the category of the recommendation target by voice input.

Note that it is based on the premise that the information processing of the embodiment is executed only in a case where specification of "Visiting Spot" as the category of the recommendation target is received from the user U.

FIG. 2 illustrates an example in which the user U inputs utterance voice of "Which places are recommended as weekend outing destinations?" into the microphone of the terminal device 10. The terminal device 10 recognizes that the user U requests a travel plan including some "Visiting Spot" such as one certain store as recommendation information from the utterance voice and, as a result, accepts specification of "Visiting Spot" as the category of the recommendation target.

In this example, the terminal device 10 holds, in a storage unit, template information TP in which "Category", "Candidate for Question Request Information", and "Candidate for Proposal Request Information" are associated with each other. Therefore, the terminal device 10 compares the category of the recommendation target of "Visiting Spot" with the template information TP and generates question request information for requesting the first external device 40 to output a question for narrowing down a recommended visiting spot SP.

According to the template information TP, a candidate for question request information "Please output a question for narrowing down recommended visiting spots." is associated with the category "Visiting Spot". In FIG. 2, it is based on a premise that the terminal device 10 has generated question request information QR of "You are a travel planner. You are consulted by a person looking for a weekend outing spot. Please output a question to find out candidates for an outing destination." in accordance with such an example.

Note that the question request information QR can be rephrased as request information for requesting the first external device 40 to output a question for asking the user U to input preferred conditions CD for the travel plan.

Then, the terminal device 10 transmits the question request information QR to the first external device 40.

Let us presume that the first external device 40 has generated a question text QT of "What type of spots are you interested in?" in response to the question request information QR and output the question text QT to the terminal device 10.

The terminal device 10 causes the speaker to output the question voice synthesized from the question text QT. FIG. 2 illustrates an example in which the user U inputs utterance voice of answering "Gastronomy." to the microphone in response to the question voice. Note that, in such an example, the answer by the user U "Gastronomy." corresponds to the preferred conditions CD of the user U for the travel plan.

In a case where the answer by the user U is obtained in this manner, the terminal device 10 generates proposal request information for requesting the first external device 40 to present a proposal regarding the recommended visiting spot SP.

According to the template information TP, a candidate for the proposal request information of "Name of Visiting Spot + Location of Visiting Spot" is associated with the category "Visiting Spot". FIG. 2 illustrates an example in which the terminal device 10 generates proposal request information PR1 of "On the basis of the answer from the counselee, answer only "Name of Recommended Visiting Spot" and "Location of Recommended Visiting Spot" according to the example.

Note that the proposal request information PR1 can be described as proposal information depending on the answer (preferred conditions CD) of the user U, specifically, presentation request information for requesting the first external device 40 to output recommendation information regarding a recommended visiting spot SP depending on the answer by the user U

Then, the terminal device 10 transmits the proposal request information PR1 to the first external device 40. The terminal device 10 may transmit the proposal request information PR1 to the first external device 40 together with information indicating the answer by the user U, namely, the preferred conditions CD of the user U.

Then, the first external device 40 specifies recommendation information RC regarding the recommended visiting spot SP on the basis of the answer "Gastronomy." of the user U and the proposal request information PR1 of "Name of Visiting Spot + Location of Visiting Spot". FIG. 2 illustrates an example in which the first external device 40 specifies the name of the visiting spot SP of "Rusk Specialty Store NA", specifies the location of the recommended visiting spot SP of "Takasaki City", and transmits the specified recommendation information RC to the terminal device 10.

In this example, even if the first external device 40 may output inaccurate recommendation information RC that is not based on the latest information, the terminal device 10 controls the first external device 40 by using the proposal request information, thereby causing the first external device 40 to search for detailed information (the unique name or the location of the recommended visiting spot SP) that can uniquely identify the recommended visiting spot SP. On the other hand, the terminal device 10 requests the second external device 70 specialized in route search to search for a travel route using the recommendation information RC output by the first external device 40 and to determine the appropriateness of the searched travel route.

Specifically, the terminal device 10 transmits the recommendation information RC output by the first external device 40 to the second external device 70 as route search condition information SC, thereby causing the second external device 70 to execute a route search including the position of the recommended visiting spot SP (the rusk specialty store NA in Takasaki City). As illustrated in FIG. 2, the terminal device 10 transmits, to the second external device 70, the route search condition information SC including the name of the visiting spot SP of "Rusk Specialty Store NA" and the location of the recommended visiting spot SP of "Takasaki City".

The second external device 70 generates route information RT regarding a travel route R passing through the recommended visiting spot SP on the basis of the route search condition information SC.

Specifically, the second external device 70 searches for the travel route R. For example, the second external device 70 may search for a travel route R from the point of departure or the current location of the user U to the recommended visiting spot SP or may search for a travel route R from the point of departure or the current location of the user U to a destination of the user U, which is a route via the recommended visiting spot SP. The second external device 70 may also calculate a required travel time T for the travel route R or travel expenses M required for traveling on the travel route R. The second external device 70 generates the route information RT further including the travel route R, the required travel time T, the travel expenses M, and the like.

Then, the second external device 70 transmits the route information RT to the terminal device 10.

Upon acquiring the route information RT from the second external device 70, the terminal device 10 determines appropriateness whether or not the route information RT is appropriate and satisfies the preferred conditions CD of the user U. Specifically, the terminal device 10 determines the appropriateness of the travel route R on the basis of the comparison between the preferred conditions CD and the route information RT.

If the terminal device 10 determines that the travel route R is appropriate and satisfies the preferred conditions CD of the user (Yes), the terminal device 10 presents the route information RT as a recommended travel plan for the user U. For example, the terminal device 10 may synthesize a voice reading out the route information RT and cause the speaker to output the synthesized voice. On the other hand, the terminal device 10 may display the route information RT on the display screen.

On the other hand, if the terminal device 10 determines that the travel route R is inappropriate and does not satisfy the preferred conditions CD of the user (No), the terminal device 10 generates proposal request information for requesting the first external device 40 to present a proposal regarding the recommended visiting spot SP again. For example, the terminal device 10 generates proposal request information for requesting the first external device 40 to present a proposal regarding another recommended visiting spot SP by a similar method using the template information TP. Another recommended visiting spot SP mentioned herein indicates another spot different from the recommended visiting spot SP corresponding to the proposal request information PR1. FIG. 2 illustrates an example in which the terminal device 10 generates proposal request information PR2 of "On the basis of the answer from the counselee, answer only 'Name of Another Recommended Visiting Spot' and 'Its Location'.".

The terminal device 10 transmits the proposal request information PR2 to the first external device 40. As a result, specifying processing of the recommendation information RC is executed again by the first external device 40. In addition, generation processing of route information RT based on the re-specified recommendation information RC (route search condition SC) is executed again by the second external device 70. In addition, the second external device 70 executes again the appropriateness determination processing through comparison between the regenerated route information RT and the preferred conditions CD.

In this manner, in a case where the travel route R is determined to be inappropriate, the information processing of the embodiment may be repeated until the travel route R is determined to be appropriate.

Meanwhile, such a situation is conceivable in which it is continuously determined that the travel route R is inappropriate even though the information processing of the embodiment is repeated many times. Therefore, the upper limit number of times N at which the information processing of the embodiment is repeated may be determined for the system 1. In addition, if the travel route R is determined to be inappropriate even when the upper limit number of times N is reached, a configuration to cause the first external device 40 to change the content of questions or a configuration to prompt the user U to re-input an answer different from the previous answer (for example, a compromised answer) may be adopted in the terminal device 10.

Furthermore, the example of FIG. 2 illustrates an example in which the terminal device 10 synthesizes question voice in the form of voice from the question and causes the speaker to output the synthesized question voice. However, the terminal device 10 may generate a question image in the form of an image from the question and display the generated question image on the display screen. Furthermore, the input by the user U may be performed by voice or screen selection. In addition, the number of questions for narrowing down the recommended visiting spot SP may be plural, and the terminal device 10 may include information specifying the number of questions in the question request information QR and transmit the information to the first external device 40. That is, the question request information of the template information TP held by the terminal device 10 may include the number of questions to be output by the first external device 40 in advance.

### [3. Functional Configuration]

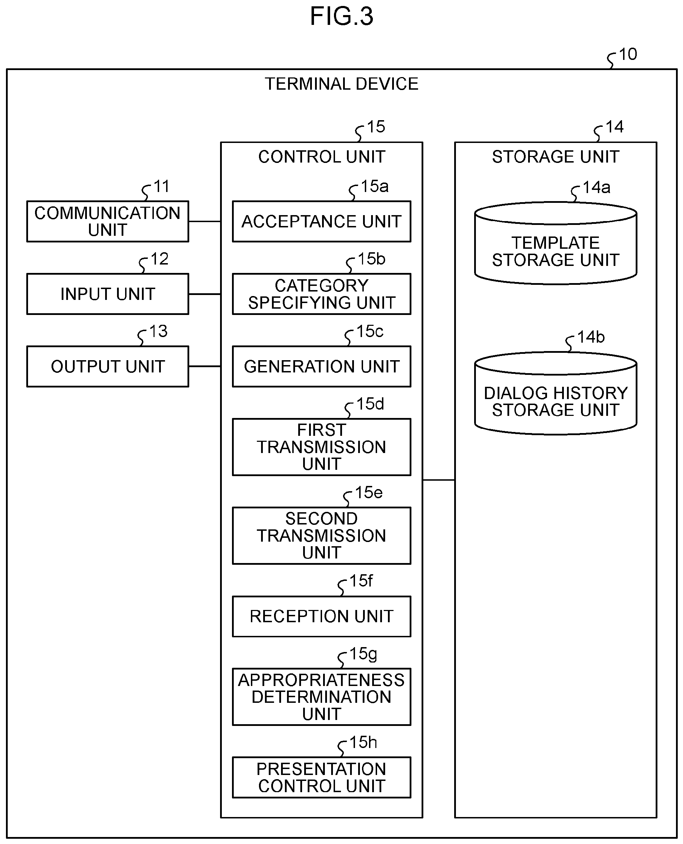

A configuration example of the terminal device 10 will be described with reference to FIG. 3. FIG. 3 is a diagram illustrating a configuration example of the terminal device 10 according to the embodiment. As illustrated in FIG. 3, the terminal device 10 includes a communication unit 11, an input unit 12, an output unit 13, a storage unit 14, and a control unit 15.

### (Communication Unit 11)

The communication unit 11 is implemented by, for example, a network interface card (NIC) or the like. The communication unit 11 is connected to the network N in a wired or wireless manner and transmits and receives information to and from the first external device 40 and the second external device 70, for example.

### (Input Unit 12)

The input unit 12 is an input device that accepts various types of input from the outside. For example, the input unit 12 is an operation device for the user U to perform various operations, such as a keyboard, a mouse, or operation keys. Note that, in a case where a touch panel is adopted in the terminal device 10, the touch panel is also included in the input unit 12. In this case, the user U performs various operations by touching the touch panel. The input unit 12 also includes a microphone that accepts voice input by utterance.

### (Output Unit 13)

The output unit 13 is a device that performs various types of output such as sound, light, vibration, or an image to the outside. The output unit 13 performs various types of output to the user U under the control of the control unit 15. Note that the output unit 13 includes a display device that displays various types of information. The display device is, for example, a liquid crystal display or an organic electro luminescence (EL) display. Note that the output unit 13 may be a touch panel type display device. In this case, the input unit 12 and the output unit 13 may be regarded as an integrated component. The output unit 13 may also be a speaker.

### (Storage Unit 14)

The storage unit 14 is implemented by, for example, a semiconductor memory element such as a random access memory (RAM) or a flash memory, or a storage device such as a hard disk or an optical disk. The storage unit 14 may store, for example, data and programs regarding the information processing of the embodiment. Furthermore, according to the example of FIG. 3, the storage unit 14 may include a template storage unit 14a and a dialog history storage unit 14b.

The template storage unit 14a stores the template information TP. The dialog history storage unit 14b stores history information of a dialog with the user U.

### (About Control Unit 15)

The control unit 15 is implemented with a central processing unit (CPU), a micro processing unit (MPU), or the like executing various programs (for example, an information processing program according to the embodiment) stored in a storage device inside the terminal device 10 using the RAM as a work area. Note that the control unit 15 is implemented by an integrated circuit such as an application specific integrated circuit (ASIC) or a field programmable gate array (FPGA).

As illustrated in FIG. 3, the control unit 15 includes an acceptance unit 15a, a category specifying unit 15b, a generation unit 15c, a first transmission unit 15d, a second transmission unit 15e, a reception unit 15f, an appropriateness determination unit 15g, and a presentation control unit 15h and implements or executes a function or an action of the information processing described below. Note that the internal configuration of the control unit 15 is not limited to the configuration illustrated in FIG. 3 and may be another configuration as long as the information processing described below is performed. Furthermore, the connection relationship of the processing units included in the control unit 15 is not limited to the connection relationship illustrated in FIG. 3 and may be another connection relationship.

### (Acceptance Unit 15a)

The acceptance unit 15a accepts information input via the input unit 12. For example, the acceptance unit 15a accepts voice input by utterance via the microphone or touch input via the touch panel. For example, the acceptance unit 15a accepts information indicating an answer by the user U to a question.

Furthermore, the acceptance unit 15a accepts preferred conditions by the user U. The preferred conditions include a preferred travel time for the travel plan, preferred expenses of the cost for the travel plan, a spot of interest preferred to be included in the travel plan, and the like. Therefore, a first external device 50 is controlled by the question request information to output such a question that makes it possible to acquire these preferred conditions from the user U.

### (Category Specifying Unit 15b)

The category specifying unit 15b accepts the specification of a category to which a recommendation target that the user U desires to be proposed belongs from among a plurality of categories. For example, the category specifying unit 15b may accept specification of a desired category by allowing the user U to select one from among options by displaying categories for the recommendation target such as "Visiting Spot", "Cooking Recipe", and "Music Content" on the display screen.

As described above, it is based on the premise that the information processing of the embodiment is executed in the case where specification of "Visiting Spot" as the category of the recommendation target is received from the user U.

### (Generation Unit 15c)

The generation unit 15c generates control information for controlling the first external device 40. For example, the generation unit 15c generates question request information for requesting the first external device 40 to output a question for narrowing down the recommended visiting spot. For example, the generation unit 15c generates the first external device 40 to output a question for allowing the user U to input preferred conditions for the travel plan from the point of departure. For example, in a case where specification of "Visiting Spot" as the category of the recommendation target is received from the user U, the generation unit 15c may generate the question request information on the basis of the template information TP in which "Category" and "Candidate for Question Request Information" are associated with each other.

In addition, the generation unit 15c generates the proposal request information for requesting the first external device 40 to provide a proposal regarding the recommended visiting spot SP. For example, in a case where specification of "Visiting Spot" as the category of the recommendation target is received from the user U, the generation unit 15c may generate the proposal request information on the basis of the template information TP in which "Category" and "Candidate for Proposal Request Information" are associated with each other.

### (First Transmission Unit 15d)

The first transmission unit 15d transmits the question request information and the proposal request information to the first external device 40. For example, the first transmission unit 15d may transmit the question request information in a case where the category of the recommendation target of "Visiting Spot" is specified and may transmit the proposal request information in a case where an answer from the user U to a question, generated by the first external device 40 according to the question request information, is obtained.

Note that, in a case where the travel route is determined to be inappropriate, the first transmission unit 15d transmits, to the first external device, proposal request information for requesting the first external device 40 to present a proposal regarding another recommended visiting spot different from the recommended visiting spot previously output by the first external device 40. The proposal request information about the other recommended visiting spot is also generated by the generation unit 15c.

Moreover, in the case where the travel route is determined to be inappropriate, the first transmission unit 15d may generate information indicating the ground (reason) for the determination that the travel route is inappropriate and transmit the information indicating the ground to the first external device 40 as reference information (hint) for causing the first external device 40 to search for the other recommended visiting spot.

The first transmission unit 15d may also transmit the preferred conditions of the user U for the travel plan to the first external device 40. For example, in a case where the user U inputs an answer to the question generated by the first external device 40 according to the question request information, the first transmission unit 15d may transmit input answer to the first external device 40 as preferred conditions.

### (Second Transmission Unit 15e)

The second transmission unit 15e transmits the route search condition information to the second external device 70. Specifically, the second transmission unit 15e generates the route search condition information from the recommendation information output by the first external device 40 according to the proposal request information and transmits the generated route search conditions to the second external device 70.

### (Reception Unit 15f)

The reception unit 15f receives the question generated by the first external device 40 according to the question request information from the first external device 40. In addition, the reception unit 15f receives, from the first external device 40, information regarding the recommended visiting spot specified by the first external device 40 according to the proposal request information.

The reception unit 15f also receives the route information regarding the travel route via the recommended visiting spot searched for by the second external device 70 according to the route search condition information. For this reason, the reception unit 15f corresponds to the route information acquisition unit.

### (Appropriateness Determination Unit 15g)

The appropriateness determination unit 15g determines the appropriateness of the travel route on the basis of a comparison between the preferred conditions of the user U and the route information. For example, the appropriateness determination unit 15g determines the appropriateness of the travel route on the basis of a comparison result obtained by comparing a preferred travel time of the user U with a required travel time required for the travel on the travel route. If the preferred travel time of the user U is within the range of the required travel time, the appropriateness determination unit 15g may determine that the travel route is appropriate.

Furthermore, the appropriateness determination unit 15g determines the appropriateness of the travel route on the basis of a comparison result obtained by comparing preferred expenses of the user U with the travel expenses. For example, the appropriateness determination unit 15g determines the appropriateness of the travel route on the basis of a comparison result obtained by comparing the preferred expenses of the user U with the travel expenses required for the travel on the travel route. If the preferred expenses of the user U are within the range of the travel expenses, the appropriateness determination unit 15g may determine that the travel route is appropriate.

### (Presentation Control Unit 15h)

In the case where the travel route is determined to be appropriate, the presentation control unit 15h presents the route information regarding the travel route as a recommended travel plan for the user U. For example, the presentation control unit 15h may synthesize a voice reading out the travel route and cause the speaker to output the synthesized voice. Meanwhile, the presentation control unit 15h may display the travel route on the display screen.

### [4. Information Processing Procedure]

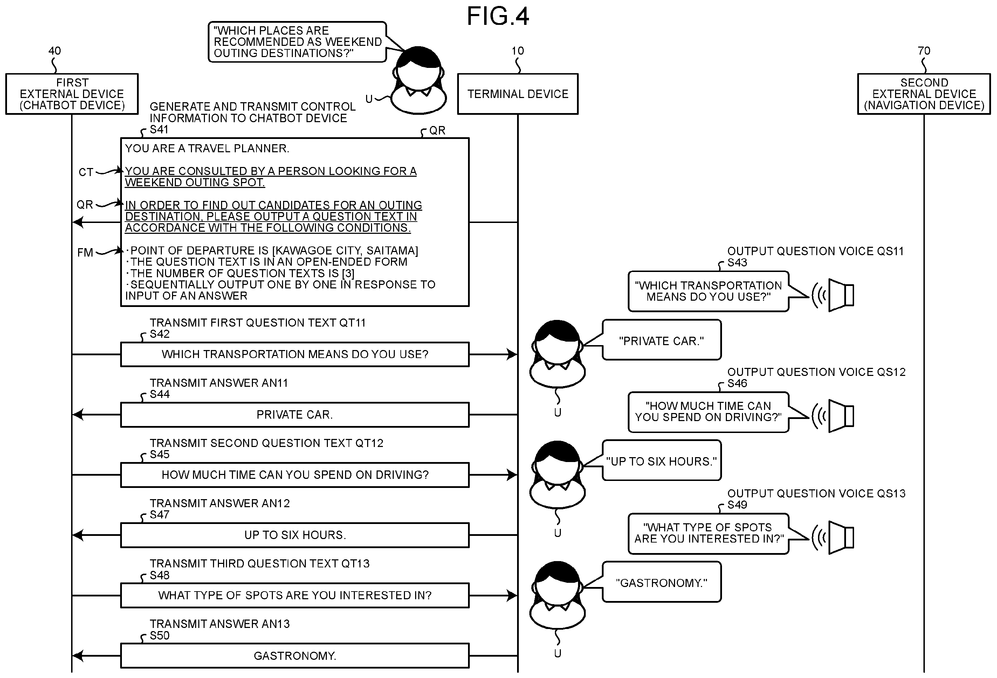

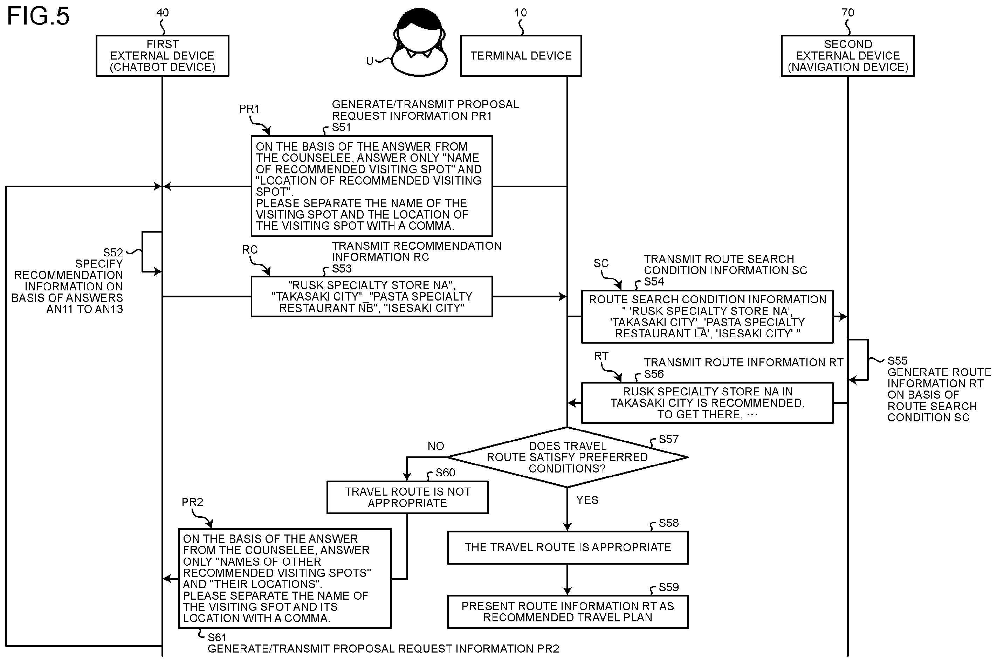

An information processing procedure implemented by the system 1 will be described with reference to FIGS. 4 and 5. The scenes illustrated in FIGS. 4 and 5 as an example correspond to a detailed example of the content described in FIG. 2.

FIG. 4 is a diagram (1) illustrating the information processing procedure according to the embodiment. FIG. 4 illustrates an example in which the user U inputs utterance voice of "Which places are recommended as weekend outing destinations?" into the microphone of the terminal device 10. In such an example, the category specifying unit 15b recognizes that the user U requests a travel plan including "Visiting Spot" as the recommendation information and, as a result, accepts specification of "Visiting Spot" as the category of the recommendation target. In this manner, the information processing of the embodiment may proceed with the reception of the category of the recommendation target of "Visiting Spot" as a starting point.

For example, the generation unit 15c of the terminal device 10 generates control information for controlling the first external device 40 on the basis of the template information TP and transmits the generated control information to the first external device 40 (step S41).

For example, the generation unit 15c generates category specifying information CT on the basis of the category of the recommendation target of "Visiting Spot". FIG. 4 illustrates an example in which the generation unit 15c generates category specifying information CT of "You are a travel planner. You are consulted by a person looking for a weekend outing spot." Note that the category specifying information CT can also be referred to as a part of prompt information for requesting information from the first external device 40.

In addition, the generation unit 15c generates the question request information QR for requesting the first external device 40 to output a question for narrowing down the recommended visiting spot SP by comparing the category of the recommendation target of "Visiting Spot" with the template information TP. FIG. 4 illustrates an example in which the generation unit 15c generates question request information QR of "In order to find out candidates for an outing destination, please output a question text in accordance with the following conditions."

In addition, the generation unit 15c may further generate the format specifying information FM defining, in accordance with the content of the question request information QR, the point of departure [Kawagoe City, Saitama pref.], that the question text is in an open-ended form, that the number of question texts is [3], that the question texts are sequentially output one by one in response to an answer, and others as the output format (output condition) of the question texts. Note that the generation unit 15c may determine the point of departure depending on the current position of the terminal device 10 or preset content of the user U or may determine the number N of question texts ("three" in the above example) according to the preset content of the user U.

Then, the first transmission unit 15d transmits the control information including the category specifying information CT, the question request information QR, and the format specifying information FM to the first external device 40. At this point, the first transmission unit 15d may simultaneously transmit the proposal request information PR1 to the first external device 40 or may transmit the proposal request information PR1 later. In the present embodiment, the proposal request information PR1 will be transmitted later.

The first external device 40 generates a first question text QT11 according to the control information and transmits the generated question text QT11 to the terminal device 10 (step S42). FIG. 4 illustrates an example in which the first external device 40 transmits the question text QT11 asking "Which transportation means do you use?" to the terminal device 10.

When the first question text QT11 is received by the reception unit 15f, the presentation control unit 15h of the terminal device 10 synthesizes question voice QS11 in a voice format from the question text QT11 and causes the speaker to output the question voice QS11 (step S43).

Let us presume that the user U inputs an answer AN11 of "A private car." to the question voice QS11 into the microphone. In such a case, the first transmission unit 15d transmits information indicating the answer AN11 to the first external device 40 in response to the acceptance of the answer AN11 by the acceptance unit 15a (step S44).

The first external device 40 subsequently generates a second question text QT12 according to the control information and transmits the generated question text QT12 to the terminal device 10 (step S45). FIG. 4 illustrates an example in which the first external device 40 transmits the question text QT12 asking "How much time can you spend on driving?" to the terminal device 10.

When the second question text QT12 is received by the reception unit 15f, the presentation control unit 15h synthesizes question voice QS12 in the voice format from the question text QT12 and causes the speaker to output the question voice QS12 (step S46).

Let us presume that the user U inputs an answer AN12 of "Up to six hours." to the question voice QS12 into the microphone. In such a case, the first transmission unit 15d transmits information indicating the answer AN12 to the first external device 40 in response to the acceptance of the answer AN12 by the acceptance unit 15a (step S47).

The first external device 40 subsequently generates a third question text QT13 according to the control information and transmits the generated question text QT13 to the terminal device 10 (step S48). FIG. 4 illustrates an example in which the first external device 40 transmits the question text QT13 asking "What type of spots are you interested in?" to the terminal device 10.

When the third question text QT13 is received by the reception unit 15f, the presentation control unit 15h synthesizes question voice QS13 in a voice format from the question text QT13 and causes the speaker to output the question voice QS13 (step S49).

Let us presume that the user U inputs an answer AN13 of "Gastronomy." for the question voice QS13 into the microphone. In such a case, the first transmission unit 15d transmits information indicating the answer AN13 to the first external device 40 in response to the acceptance of the answer AN13 by the acceptance unit 15a (step S50).

In this example, in step S50, the question voices corresponding to the three question texts (N = 3), which is the prescribed number of question texts, have been sequentially presented one by one in response to an answer by the user U, and the answers to the question voices have been acquired.

The process proceeds to FIG. 5. FIG. 5 is a diagram (2) illustrating the information processing procedure according to the embodiment. The generation unit 15c generates first proposal request information PR1 as the proposal request information PR for requesting the first external device 40 to present a proposal regarding the recommended visiting spot SP, and the first transmission unit 15d transmits the proposal request information PR1 to the first external device 40 (step S51).

For example, the generation unit 15c generates the first proposal request information PR1 by comparing the category of the recommendation target of "Visiting Spot" with the template information TP. FIG. 5 illustrates an example in which the generation unit 15c generates the proposal request information PR1 of "On the basis of the answer from the counselee, answer only 'Name of Recommended Visiting Spot' and 'Location of Recommended Visiting Spot'. Please separate the name of the visiting spot and the location of the visiting spot with a comma." Note that the reason for separating "Name of Recommended Visiting Spot" and "Location of Recommended Visiting Spot" with a comma is to enable the terminal device 10 to distinguish between the text indicating the name of the recommended visiting spot and the text indicating the location of the recommended visiting spot.

The first external device 40 specifies the recommendation information RC regarding the recommended visiting spot SP on the basis of the answers AN11 to AN13 and the proposal request information PR1 of "Name of Visiting Spot + Location of Visiting Spot" (step S52). FIG. 5 illustrates an example in which the first external device 40 specifies the recommendation information RC regarding a plurality of recommended visiting spots SP. Specifically, an example is illustrated in which the first external device 40 specifies a set of the name of the visiting spot SP of "Rusk Specialty Store NA" and the location of the recommended visiting spot SP of "Takasaki City" and further specifies a set of the name of the visiting spot SP of "Pasta Specialty Restaurant NB" and the location of the recommended visiting spot SP of "Isesaki City".

It can be said that the first external device 40 performs search processing of searching for a recommended visiting spot SP on the basis of the answers AN11 to AN13 and the proposal request information PR1 of "Name of Visiting Spot + Location of Visiting Spot". In this example, the user U may be able to input the scheduled visit date, the number of visitors, and the like as the search conditions regardless of the question from the first external device 40. For example, the acceptance unit 15a of the terminal device 10 may accept input of search conditions from the user U, and in a case where search conditions are input by the user U, the first transmission unit 15d may transmit the search conditions input by the user U to the first external device 40.

In a case where the search conditions (such as the scheduled visit date and the number of visitors) input by the user U are accepted, the first external device 40 may search for a recommended visiting spot SP further considering the search conditions input by the user U.

Furthermore, the first external device 40 transmits the recommendation information RC to the terminal device 10 (step S53).

When the recommendation information RC is received by the reception unit 15f, the second transmission unit 15e of the terminal device 10 transmits the received recommendation information RC as the route search condition information SC to the second external device 70 (step S54). As illustrated in FIG. 5, the second transmission unit 15e transmits, to the second external device 70, the route search condition information SC including a set of the name of the visiting spot SP of "Rusk Specialty Store NA" and the location of the recommended visiting spot SP of "Takasaki City". In addition, the second transmission unit 15e transmits, to the second external device 70, the route search condition information SC including a set of the name of the visiting spot SP of "Pasta Specialty Restaurant NB" and the location of the recommended visiting spot SP of "Isesaki City".

Note that, in a case where the search conditions (for example, a scheduled visit date and the number of visitors) are input by the user U, the second transmission unit 15e may also transmit the search conditions input by the user U to the second external device 70.

The second external device 70 generates route information RT regarding the travel route R via the recommended visiting spot SP on the basis of the route search condition information SC (step S55).

Specifically, the second external device 70 searches for the travel route R. For example, the second external device 70 may search for a travel route R from the point of departure or the current location of the user U to the recommended visiting spot SP or may search for a travel route R from the point of departure or the current location of the user U to a destination of the user U, which is a route via the recommended visiting spot SP.

The second external device 70 may also calculate a required travel time T for the travel route R or travel expenses M required for traveling on the travel route R. In a case where search conditions (for example, the scheduled visit date and the number of visitors) are input by the user U, the second external device 70 can calculate the required travel time T and the travel expenses M on the basis of the search conditions input by the user U.

The second external device 70 generates the route information RT further including the travel route R, the required travel time T, the travel expenses M, and the like. Note that the required travel time T may be calculated by adding the average stay time at the visiting spot SP to the time required for traveling, and in a case where the transportation means is a private car, the travel expenses M may be calculated by adding the energy cost of the private car to the road toll.

Note that, in the above example, two visiting spots SP, namely, "Rusk Specialty Store NA" and "Pasta Specialty Restaurant NB", are obtained by the search by the first external device 40. In such an example, the second external device 70 may search for one travel route R that passes through two visiting spots SP at a time or may search for two travel routes R that each pass through one of the two visiting spots SP.

In addition, the second external device 70 may also acquire, as additional information to be presented together with the route information RT, a word-of-mouth evaluation, business days, business hours, average sales per customer, or others of the visiting spots SP.

The second external device 70 transmits the route information RT including the recommendation information RC to the terminal device 10 (step S56). FIG. 5 illustrates an example in which the second external device 70 transmits the route information RT including the recommendation information RC and the information of the travel route R to the terminal device 10, such as "Pasta specialty restaurant NA in Takasaki City is recommended. To get there, ..."

When the route information RT is received by the reception unit 15f, the appropriateness determination unit 15g of the terminal device 10 determines appropriateness whether or not the travel route R in the route information RT is appropriate that satisfies the preferred conditions CD of the user U (step S57). Specifically, the appropriateness determination unit 15g determines the appropriateness of the travel route R on the basis of a comparison between the preferred conditions CD and the route information RT.

In the example of FIG. 5, the answers AN11 to AN13 of the user U correspond to the preferred conditions CD. Therefore, the appropriateness determination unit 15g may determine whether the travel route R satisfies at least one of the answers AN11 to AN13 or all of the answers AN11 to AN13.

For example, in a case where the answer AN12 indicates the preferred travel time CD12 (an example of the preferred conditions CD) of the user U, the appropriateness determination unit 15g determines the appropriateness of the travel route R on the basis of a comparison result obtained by comparing the preferred travel time CD12 of the user U with the required travel time T required for the travel on the travel route R. If the preferred travel time CD12 of the user U is within the range of the required travel time T, the appropriateness determination unit 15g may determine that the travel route R is appropriate. Alternatively, in a case where the preferred conditions CD indicate the preferred expenses of the user U, the appropriateness determination unit 15g may determine the appropriateness of the travel route R on the basis of a comparison result obtained by comparing the preferred expenses of the user U with the travel expenses M required for the travel on the travel route R. If the preferred expenses of the user U are within the range of the travel expenses M, the appropriateness determination unit 15g may determine that the travel route is appropriate. Alternatively, the appropriateness determination unit 15g may determine the appropriateness of the travel route R on the basis of a comparison result obtained by comparing the preferred expenses of the user U with the total expenses obtained by adding a fee based on the average sales per customer in the visiting spot SP to the travel expenses M.

If the travel route R satisfies the preferred conditions CD of the user U (step S57; Yes), the appropriateness determination unit 15g determines that the travel route R is an appropriate route that can satisfy the user U (step S58). Then, the presentation control unit 15h presents the route information RT as a recommended travel plan for the user U (step S59). For example, the presentation control unit 15h may synthesize a voice reading out the route information RT and cause the speaker to output the synthesized voice. Meanwhile, the presentation control unit 15h may display an image of the route information RT on the display screen. Furthermore, the presentation control unit 15h may output both the voice of the route information RT and the image of the recommendation information RC.

On the other hand, if the travel route R does not satisfy the preferred conditions CD of the user (step S57; No), the appropriateness determination unit 15g determines that the travel route R is an inappropriate route that cannot satisfy the user U (step S60). Note that, for example, also in cases where the second external device 70 fails to search for a travel route R due to reasons such as that the visiting spot SP proposed by the first external device 4 does not currently exist, it may be determined that the travel route R is an inappropriate route.

As described above, in a case where it is determined that the travel route R is inappropriate and does not satisfy the preferred conditions CD of the user, the generation unit 15c generates the proposal request information PR for requesting the first external device 40 to present a proposal regarding the recommended visiting spot SP again.

Specifically, the generation unit 15c generates second proposal request information PR2 as the proposal request information PR for requesting the first external device 40 to present a proposal regarding the recommended visiting spot SP, and the first transmission unit 15d transmits the proposal request information PR2 to the first external device 40 (step S61).

For example, the generation unit 15c generates proposal request information PR2 for requesting the first external device 40 to present a proposal regarding another recommended visiting spot SP by a similar method using the template information TP. Another recommended visiting spot SP mentioned herein indicates another spot different from the recommended visiting spots SP corresponding to the proposal request information PR1 ("Rusk Specialty Store NA" and "Pasta Specialty Restaurant NB"). FIG. 5 illustrates an example in which the generation unit 15c generates the proposal request information PR2 of "On the basis of the answer from the counselee, answer only 'Name of Another Recommended Visiting Spot' and 'Its Location'. Please separate the name of the visiting spot and the location of the visiting spot with a comma." At this point, the first transmission unit 15d may include information indicating the ground (reason) for the determination that the travel route is inappropriate in the proposal request information PR2 and transmit the proposal request information PR2 to the first external device 40. For example, in a case where the proposal request information PR2 includes information indicating that it takes too much time in a previously proposed visiting spot SP, the first external device 40 can propose a visiting spot SP closer to the point of departure or the current location of the user U than the previous one.

As a result, the processing returns to step S52, and the processing in and after step S52 is executed again in the system 1.

### [5. Hardware Configuration]

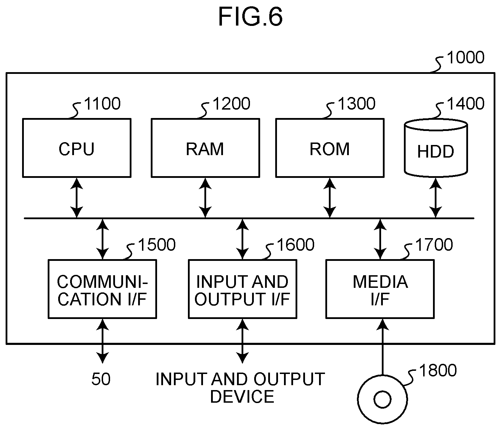

The above-described terminal device 10 may be implemented by, for example, a computer 1000 having a configuration as illustrated in FIG. 6. FIG. 6 is a hardware configuration diagram illustrating an example of a computer that implements the functions of the terminal device 10 according to the embodiment. The computer 1000 includes a CPU 1100, a RAM 1200, a ROM1300, an HDD 1400, a communication interface (I/F) 1500, an input and output interface (I/F) 1600, and a media interface (I/F) 1700.

The CPU 1100 operates on the basis of a program stored in the ROM1300 or the HDD 1400 and controls each unit. The ROM1300 stores a boot program executed by the CPU 1100 when the computer 1000 is activated, a program dependent on hardware of the computer 1000, and others.

The HDD 1400 stores a program executed by the CPU 1100, data used by the program, and others. The communication interface 1500 receives data from another device via a predetermined communication network, sends the data to the CPU 1100, and transmits data generated by the CPU 1100 to another device via a predetermined communication network.

The CPU 1100 controls an output device such as a display and an input device such as a keyboard via the input and output interface 1600. The CPU 1100 acquires data from the input device via the input and output interface 1600. In addition, the CPU 1100 outputs generated data to the output device via the input and output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700 and executes the loaded program. The recording medium 1800 is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the terminal device 10 according to the embodiment, the CPU 1100 of the computer 1000 implements the function of the control unit 15 by executing a program loaded on the RAM 1200. The CPU 1100 of the computer 1000 reads and executes these programs from the recording medium 1800; however, as another example, these programs may be acquired from another device via a predetermined communication network.

### [6. Others]

Among the pieces of processing described in the above embodiments, all or some pieces of the processing described as those performed automatically can be performed manually, alternatively, all or some pieces of the processing described as those performed manually can be performed automatically by a known method. In addition, processing procedures, specific names, and information including various types of data and parameters mentioned herein or illustrated in the drawings can be modified as preferred unless otherwise specified. For example, the various types of information illustrated in the drawings are not limited to those illustrated.

In addition, each component of each device illustrated in the drawings is functionally conceptual and is not necessarily physically configured as illustrated in the drawings. That is, a specific form of distribution and integration of the devices is not limited to that illustrated in the drawings, and all or a part thereof can be functionally or physically distributed or integrated in a preferred unit size depending on various loads, usage conditions, and the like.

In addition, the above-described embodiments can be combined as appropriate within a range in which the pieces of processing content do not contradict each other.

Although some of the embodiments of the present application have been described in detail with reference to the drawings, these are merely examples, and the present invention can be implemented in other forms subjected to various modifications and/or improvements on the basis of the knowledge of those skilled in the art, including the aspects described herein.

### Reference Signs List

- 1: SYSTEM

- 10: TERMINAL DEVICE
- 12: INPUT UNIT
- 13: OUTPUT UNIT
- 14: STORAGE UNIT
- 15: CONTROL UNIT
- 15a: ACCEPTANCE UNIT
- 15b: CATEGORY SPECIFYING UNIT
- 15c: GENERATION UNIT
- 15d: FIRST TRANSMISSION UNIT
- 15e: SECOND TRANSMISSION UNIT
- 15f: RECEPTION UNIT
- 15g: APPROPRIATENESS DETERMINATION UNIT
- 15h: PRESENTATION CONTROL UNIT

## Claims

1. An information processing device, comprising:
a first transmission unit that transmits a preferred condition by a user for a travel plan from a point of departure and a presentation request for proposal information to a first external device that presents the proposal information including a recommended visiting spot that is a spot recommended to visit from the point of departure in a case where the preferred condition is input;
a second transmission unit that transmits route search condition information based on the proposal information presented by the first external device in response to the presentation request to a second external device that is different from the first external device;
a route information acquisition unit that acquires route information regarding a travel route via the recommended visiting spot searched for by the second external device in accordance with the route search condition information;
an appropriateness determination unit that determines appropriateness of the travel route on a basis of a comparison between the preferred condition and the route information; and
a presentation control unit that presents the travel route as a recommended travel plan for the user in a case where the travel route is determined to be appropriate.

2. The information processing device according to claim 1,
wherein the preferred condition includes a preferred travel time for the travel plan,
the route information acquisition unit acquires the route information including a required travel time for the travel route, and
the appropriateness determination unit determines appropriateness of the travel route on a basis of a comparison result obtained by comparing the preferred travel time and the required travel time.

3. The information processing device according to claim 1,
wherein the preferred condition includes preferred expenses for a cost of the travel plan,
the route information acquisition unit acquires the route information including travel expenses for travel on the travel route, and
the appropriateness determination unit determines appropriateness of the travel route on a basis of a comparison result obtained by comparing the preferred expenses with the travel expenses.

4. The information processing device according to claim 1, further comprising:
a generation unit that generates question request information for requesting the first external device to output a question for allowing the user to input the preferred condition,
wherein the presentation control unit presents, to the user, a question output from the first external device according to the question request information, and
the first transmission unit transmits the preferred condition including an answer by the user to the question and the presentation request to the first external device.

5. The information processing device according to claim 1,
wherein the second transmission unit transmits the route search condition information based on the proposal information including a plurality of the recommended visiting spots to the second external device in a case where the proposal information including the plurality of the recommended visiting spots is presented by the first external device, and
the route information acquisition unit acquires the route information regarding the travel route via the plurality of the recommended visiting spots.

6. The information processing device according to claim 1,
wherein, in a case where the travel route is determined to be inappropriate, the first transmission unit transmits, to the first external device, a presentation request for another recommended visiting spot that is different from the recommended visiting spot previously presented by the first external device.

7. The information processing device according to claim 6,
wherein, in a case where the travel route is determined to be inappropriate, the first transmission unit generates information indicating ground that the travel route is determined to be inappropriate and transmits the information indicating the ground to the first external device as reference information when the first external device searches for the other recommended visiting spot.

8. An information processing method executed by an information processing device, the method comprising:
a first transmission step of transmitting a preferred condition by a user for a travel plan from a point of departure and a presentation request for proposal information to a first external device that presents the proposal information including a recommended visiting spot that is a spot recommended to visit from the point of departure in a case where the preferred condition is input;
a second transmission step of transmitting route search condition information based on the proposal information presented by the first external device in response to the presentation request to a second external device that is different from the first external device;
a route information acquisition step of acquiring route information regarding a travel route via the recommended visiting spot searched for by the second external device in accordance with the route search condition information;
an appropriateness determination step of determining appropriateness of the travel route on a basis of a comparison between the preferred condition and the route information; and
a presentation control step of presenting the travel route as a recommended travel plan for the user in a case where the travel route is determined to be appropriate.

9. An information processing program executed by an information processing device, the information processing program causing the information processing device to execute:
a first transmission procedure of transmitting a preferred condition by a user for a travel plan from a point of departure and a presentation request for proposal information to a first external device that presents the proposal information including a recommended visiting spot that is a spot recommended to visit from the point of departure in a case where the preferred condition is input;
a second transmission procedure of transmitting route search condition information based on the proposal information presented by the first external device in response to the presentation request to a second external device that is different from the first external device;
a route information acquisition procedure of acquiring route information regarding a travel route via the recommended visiting spot searched for by the second external device in accordance with the route search condition information;
an appropriateness determination procedure of determining appropriateness of the travel route on a basis of a comparison between the preferred condition and the route information; and
a presentation control procedure of presenting the travel route as a recommended travel plan for the user in a case where the travel route is determined to be appropriate.
